# EUROPÄISCHE PATENTSCHRIFT

(11) **EP 0 580 679 B1**
(45) Veröffentlichungstag und Bekanntmachung des Hinweises auf die Patenterteilung: **15.02.1995**
(21) Anmeldenummer: 92908410.1
(22) Anmeldetag: 09.04.1992
(51) Int. Cl.: F16B 9/02, H02K 5/24, F16F 1/36

(54) **EINRICHTUNG ZUM BEFESTIGEN EINES EINEN BEFESTIGUNGSFLANSCH AUFWEISENDEN BAUTEILS AN EINER GERÄTEWAND**
DEVICE FOR FASTENING A COMPONENT WITH A MOUNTING FLANGE TO THE WALL OF AN APPLIANCE
DISPOSITIF POUR FIXER SUR UNE PAROI D'APPAREIL UN COMPOSANT POURVU D'UNE BRIDE DE FIXATION

(30) Priorität: 17.04.1991 DE 9104715 U
(43) Veröffentlichungstag der Anmeldung: 02.02.1994
(73) Patentinhaber: Siemens Nixdorf Informationssysteme Aktiengesellschaft, 33102 Paderborn (DE)
(72) Erfinder: BRÄUTIGAM, Alfons, D-33106 Paderborn (DE); PIEPER, Wolfgang, D-33129 Delbrück (DE)
(74) Vertreter: Fuchs, Franz-Josef, Dr.-Ing.
(86) Internationale Anmeldenummer: EP9200815
(87) Internationale Veröffentlichungsnummer: WO9218778

(56) Entgegenhaltungen:
- FR-A- 1 053 667
- GB-A- 790 960
- GB-A- 1 478 017
- US-A- 2 251 398

## Beschreibung

Die vorliegende Erfindung betrifft eine Einrichtung der im Oberbegriff des Anspruches 1 genannten Art.

Im allgemeinen wird zum Befestigen des Bauteils an einer Gerätewand der Befestigungsflansch durch Schrauben, Nieten und dergleichen mit der Gerätewand verbunden. Eine derartige Befestigung hat bei Bauteilen, die Vibrationen erzeugen, also beispielsweise Motoren oder Transformatoren, den Nachteil, daß diese Vibrationen auf die Gerätewand übertragen und im allgemeinen durch diese akustisch verstärkt werden. Es ist auch schon bekannt, derartige Bauteile über schwingungsdämpfende Elemente mit einer Gerätewand zu verbinden. Dadurch wird jedoch die Montage derartiger Bauteile erheblich erschwert, da im allgemeinen mehrere Dämpfungselemente zu zugeordneten Bohrungen der Gerätewand einerseits und des Befestigungsflansches andererseits ausgerichtet und mit diesen einzeln verschraubt werden müssen.

Durch die GB-A-14 78 017 ist bereits eine Einrichtung der im Oberbegriff des Anspruches 1 genannten Art bekannt, bei der die Befestigungselemente als federelastische Klammern ausgebildet sind, die auf die Innenseite eines Rahmens aufgesteckt werden und die mit Schnappelementen versehen sind, in die das zu befestigende Bauteil einrastbar ist. Um das Bauteil wieder zu lösen, müssen die Schnappelemente aller verwendeter Klammern betätigt werden, damit sie das Bauteil freigeben, was umständlich ist und im allgemeinen nicht von einer Person durchgeführt werden kann. Außerdem haben die federelastischen Klammern keine schwingungsdämpfenden Eigenschaften.

Es ist die Aufgabe der vorliegenden Erfindung, eine Einrichtung der im Oberbegriff des Anspruches 1 genannten Art zu schaffen, die einfach und damit preiswert ist, die eine einfache Montage der Bauteile ermöglicht und die gute Schwingungsdämpfungseigenschaften hat.

Diese Aufgabe ist erfindungsgemäß durch die im Anspruch 1 beschriebenen Merkmale gelöst.

Das Bauteil wird, ebenso wie bei der bekannten Lösung, nicht mehr auf die Gerätewand aufgesetzt und mit dieser verschraubt, sondern in eine Gerätewandausnehmung oder -lücke eingesetzt und über die Befestigungselemente mit den die Ausnehmung begrenzenden Kanten der Gerätewand verbunden. Die Befestigungselemente können als einfache Formteile ausgebildet sein, wie anhand eines Ausführungsbeispieles dargelegt werden wird. Sie werden vorzugsweise aus einem gummielastischen Material hergestellt, welches gute Schwingungsdämpfungseigenschaften hat, jedoch fest genug ist, das Bauteil sicher zu halten.

Um die Montage der Einrichtung zu erleichtern, sind erfindungsgemäß Befestigungselemente unterschiedlichen Typs vorgesehen. Beide Typen sind vorzugsweise im Bereich der Aufstecktaschen gleich; die Verankerungselemente sind jedoch bei einem Typ von Befestigungselementen jeweils zangenartig zum beidseitigen Umgreifen des Kantenbereiches der Gerätewand ausgebildet. Im montierten Zustand sind diese Befestigungselemente formschlüssig sowohl mit dem Befestigungsflansch als auch mit der Gerätewand verbunden, so daß sie nicht ohne Zerstörung des Befestigungselementes gelöst werden können. Die Verankerungselemente des anderen Typs umfassen jeweils zur Anlage an nur einer Seite des Kantenbereiches einer Gerätewand ausgebildete Anschlagnasen; zur Fixierung dieser Befestigungselemente an der Gerätewand ist zusätzlich ein Schnappriegel vorgesehen, welcher zwischen dem Befestigungselement und dem zugeordneten Kantenbereich der Gerätewand einsetzbar ist und welcher einerseits das Befestigungselement hält und andererseits die Kante der Gerätewand mit einer Federzunge hintergreift. Der Schnappriegel kann durch Verbiegen der Federzunge wieder gelöst werden, so daß das zugeordnete Befestigungselement demontiert werden kann, wie anhand eines Ausführungsbeispieles genauer dargelegt wird. Bei einem Bauteil mit einem rechteckigen Befestigungsflansch werden vorzugsweise nur zwei voneinander abgewandte Seiten des Befestigungsflansches über jeweils ein Befestigungselement mit entsprechenden zugeordneten Kantenbereichen der Gerätewand verbunden. Es hat sich gezeigt, daß eine derartige zweiseitige Befestigung für einen sicheren Halt auch von ansonsten kritischen Geräten ausreicht; dazu gehören beispielsweise Elektromotoren, die im Betrieb durch aus der abgegebenen Antriebsleistung hervorgerufene Reaktionskräfte belastet werden, sowie angetriebene Geräte, bei denen durch die Übertragung der Antriebsleistung die Befestigungseinrichtungen belastet werden.

Ein Ausführungsbeispiel der Erfindung ist in der Zeichnung dargestellt und im folgenden näher beschrieben. Es zeigen:
- Fig. 1 bis 4: eine Einrichtung zum Befestigen eines Elektromotors an einer Gerätewand in unterschiedlichen Montagezuständen;
- Fig. 5: einen Längsschnitt durch eine Anordnung gemäß Fig. 4 entlang der Schnittlinie V-V.

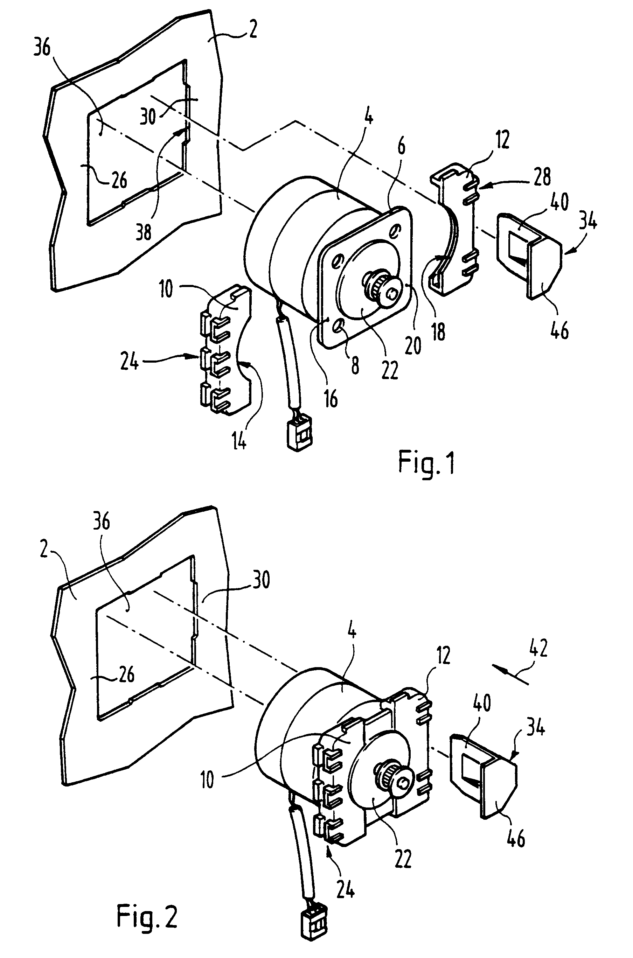

Die Fig. 1 zeigt eine Gerätewand 2, an welcher ein Elektromotor 4 befestigt werden soll. Der Elektromotor 4 hat einen Befestigungsflansch 6, an welchem Bohrungen 8 ausgebildet sind, die im allgemeinen zur Aufnahme von Befestigungsschrauben dienen; die Bohrungen 8 haben für die vorliegende Erfindung keine Bedeutung mehr.

Zur Befestigung des Elektromotors 4 an der Gerätewand 2 sind zwei Befestigungselemente 10 bzw. 12 vorgesehen, die auf den Befestigungsflansch 6 aufgesteckt werden können, wie Fig. 2 erkennen läßt. Das Befestigungselement 10 ist auf der dem Befestigungsflansch 6 in Fig. 1 zugewandten Seite mit einer Aufstecktasche 14 versehen, die die dem Befestigungselement 10 zugewandte Kante 16 des Befestigungsflansches 6 aufnehmen kann. Entsprechend ist das Befestigungselement 12 mit einer Aufstecktasche 18 versehen, die die dem Befestigungselement 12 zugewandte Kante 20 des Befestigungsflansches 6 aufnehmen kann. Die an der in den Fig. 1 bis 4 dem Betrachter zugewandten Unterseite des Befestigungsflansches 6 anliegenden Wände der Befestigungselemente 10 bzw. 12 sind jeweils mit einer kreisabschnittförmigen Ausnehmung versehen, die an den auf der Unterseite des Befestigungsflansches 6 überstehenden kreisförmigen Vorsprung 22 angepaßt sind, wie beispielsweise in Fig. 2 erkennbar ist. In entsprechender Weise sind die an der Oberseite des Befestigungsflansches 6 anliegenden Wände der Befestigungselemente 10 bzw. 12 mit kreisabschnittförmigen Ausnehmungen versehen, die sich an den zylindrischen Körper des Elektromotors 4 anpassen.

Das Befestigungselement 10 ist an seiner dem Befestigungsflansch 6 abgewandten Außenseite mit drei gleichen Verankerungselementen 24 versehen, die jeweils zangenartig zum beidseitigen Umgreifen des zugeordneten Kantenbereiches 26 der Gerätewand 2 ausgebildet sind.

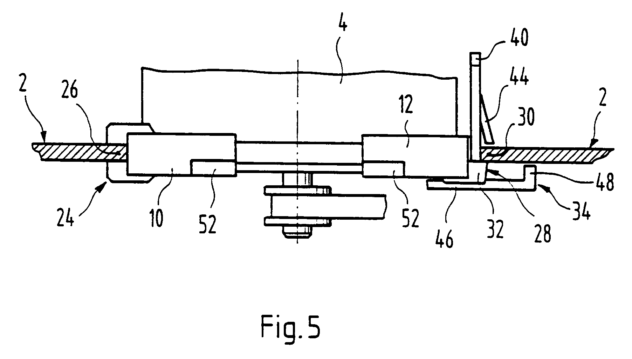

Das Befestigungselement 12 ist mit zwei gleichen Verankerungselementen 28 versehen, die im Gegensatz zu den Verankerungselementen 24 des Befestigungselementes 10 nicht zangenartig ausgebildet sind, sondern jeweils nur zur Anlage an der in Fig. 1 dem Betrachter zugewandten Seite des zugeordneten Kantenbereiches 30 ausgebildete Anschlagnasen 32 umfassen (siehe auch Fig. 5). Außerdem ist zur endgültigen Sicherung des Elektromotors 4 an der Gerätewand 2 ein Schnappriegel 34 vorgesehen, dessen Aufbau und Funktion weiter unten genauer erklärt wird.

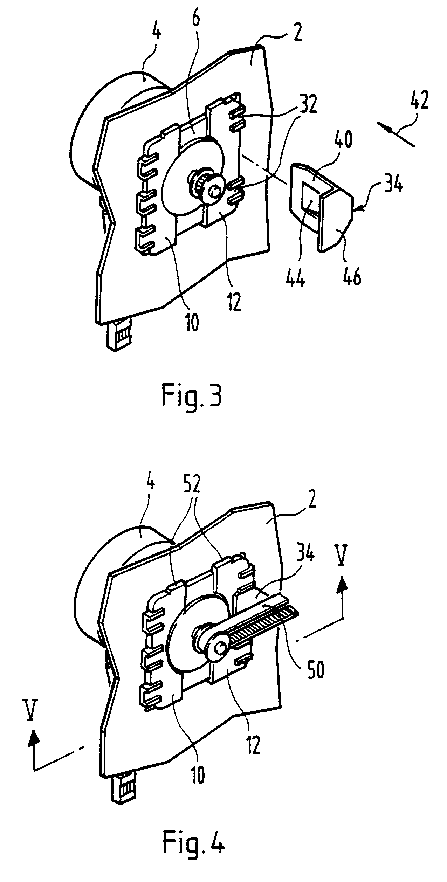

Die Montage des Elektromotors 4 an der Gerätewand erfolgt in der nachstehend beschriebenen Weise:
Zunächst werden die in Fig. 1 noch vom Elektromotor 4 getrennten Befestigungselemente 10 bzw. 12 auf die zugeordneten Kanten 16 bzw. 20 des Befestigungsflansches 6 aufgesteckt (siehe Fig. 2). Sodann wird der Elektromotor 4 durch die etwa der Form des Befestigungsflansches 6 entsprechende rechteckige Ausnehmung 36 der Gerätewand 2 hindurchgesteckt. Durch leichtes Kippen des Elektromotors 4 gegenüber der Gerätewand in einer horizontalen Ebene können die Verankerungselemente 24 auf den zugeordneten Kantenbereich 26 so aufgesteckt werden, daß sie den Kantenbereich 26 etwa zangenartig umgreifen. Anschließend wird der Elektromotor 4 wieder in seine Ausgangslage zurückgekippt, bei der der Befestigungsflansch 6 zur Gerätewand 2 parallel ist, wobei sich die die Verankerungselemente 28 des Befestigungselementes 12 bildenden Änschlagnasen 32 an den zugeordneten Kantenbereich 30 anlegen, wie Fig. 3 zeigt.

Der Kantenbereich 30 hat eine kleine Aussparung 38 (siehe Fig. 1) derart, daß bei der Anordnung gemäß Fig. 3 zwischen dem Befestigungselement 12 und dem Kantenbereich 30 eine Lücke verbleibt. Um diese Lücke nicht durch die Verankerungselemente zu verdecken, hat das Befestigungselement 12 im Gegensatz zum Befestigungselement 10 nur zwei äußere Verankerungselemente 32, jedoch kein dazwischenliegendes mittleres Verankerungselement. In diese Lücke kann der Schnappriegel 34 eingeführt werden. Der Schnappriegel 34 besteht im wesentlichen aus einem zur Längsachse des Elektromotors 4 parallelen Längskeil 40, welcher in Richtung des Pfeiles 42 in die durch die Aussparung 38 gebildete Lücke einführbar ist. Aus der Ebene des Längskeils 40 steht eine elastische Federzunge 44 heraus, die sich nach dem Einschieben des Längskeils 40 elastisch hinter der Rückseite des Kantenbereiches 30 verspreizt, wie insbesondere Fig. 5 zeigt. An dem in Einschieberichtung 42 hinteren Ende des Längskeils 40 ist ein Querflansch 46 angeordnet, welcher sich im montierten Zustand einerseits an das Befestigungselement 12 anlegt und andererseits mittels eines am Querflansch 46 ausgebildeten Distanzsteges 48 an der Gerätewand 2. Wie insbesondere Fig. 5 erkennen läßt, hält der Schnappriegel 34 die Anschlagnasen 32 in Anlage am zugeordneten Kantenbereich 30 und stabilisiert auf diese Weise die gesamte Anordnung.

Zum Demontieren des Elektromotors 4 wird die Federzunge 44 manuell in eine Lage verstellt, in der sie mit dem Längskeil 40 bündig ist, so daß der Schnappriegel 34 entgegen der Richtung des Pfeiles 42 herausgezogen werden kann. Sodann können durch Kippen des Elektromotors 4. die Anschlagsnasen 32 vom zugeordneten Kantenbereich 30 abgehoben und anschließend die Verankerungselemente 24 außer Eingriff mit dem zugeordneten Kantenbereich 26 gebracht werden.

Die Befestigungselemente 10 und 12 bestehen vorzugsweise aus einem gummielastischen Material, welches einerseits starr genug ist, den Elektromotor auch dann sicher zu halten, wenn über den Zahnriemen 50 (siehe Fig. 4) Kräfte übertragen werden, andererseits weich genug, um eine gute Geräuschdämpfung zwischen dem Elektromotor 4 und der Gerätewand 2 sicherzustellen.

Der Schnappriegel ist vorzugsweise aus einem federelastischen Material, beispielsweise einem Kunststoffmaterial hergestellt.

Um den Sitz des Elektromotors 4 in der Ausnehmung 36 der Gerätewand 2 weiter zu verbessern, haben die Befestigungselemente 10 und 12 jeweils Anschlagnasen 52, die sich im montierten Zustand an die zu den Kantenbereichen 26 bzw. 30 quer verlaufenden Kantenbereiche der Ausnehmung 36 anlegen, wie insbesondere aus Fig. 4 erkennbar ist.

Wie insbesondere Fig. 5 erkennen läßt, ist die Anordnung der Befestigungselemente 10, 12 so gewählt, daß durch die Zugkraft des Zahnriemens 50 der Motor 4 um eine etwa im Kantenbereich 26 liegende Achse verschwenkt wird, so daß die Verankerungselemente 32 gegen den zugeordneten Kantenbereich 30 angepreßt werden, wodurch ein eventuell vorhandenes Spiel zwischen dem Kantenbereich 30 einerseits und dem Verankerungselement 32 bzw. der Federzunge 44 andererseits unwirksam wird.

Bei dem Befestigungselement 10 kann schon konstruktiv ein spielfreier Sitz der Verankerungselemente 24 auf dem zugeordneten Kantenbereich 26 vorgesehen sein.

## Patentansprüche

1. Einrichtung zum Befestigen eines einen Befestigungsflansch aufweisenden Bauteils in einer Gerätewand, umfassend
Befestigungselemente (10, 12), die einerseits mit Aufstecktaschen (14, 18) zum Aufstecken auf den Befestigungsflansch (6) und andererseits mit Verankerungselementen (24, 28) für eine Verankerung an Kantenbereichen (26, 30) der Gerätewand (2) versehen sind, **gekennzeichnet** durch Befestigungselemente (10) eines ersten Typs, deren Verankerungselemente (24) jeweils zangenartig zum beidseitigen Umgreifen des Kantenbereiches (26) einer Gerätewand (2) ausgebildet sind, sowie durch Befestigungselemente (12) eines zweiten Typs, deren Verankerungselemente (28) jeweils zur Anlage an einer Seite des Kantenbereichs (30) einer Gerätewand (2) ausgebildete Anschlagnasen (32) umfassen sowie wenigstens einen zwischen dem Befestigungselement (12) und dem zugeordneten Kantenbereich (30) der Gerätewand (2) einsetzbaren Schnappriegel (34) mit einer Federzunge (44) zum Hintergreifen der in Einsetzrichtung (42) rückwärtigen Seite des Kantenbereiches (30) und mit einem Halteflansch (46) zur Anlage an der in Einsetzrichtung vorderen Seite des Befestigungselementes (12).

2. Einrichtung nach Anspruch 1, für ein Bauteil mit einem rechteckigen Befestigungsflansch, dadurch **gekennzeichnet**, daß einer von zwei voneinander abgewandten Seitenkanten (16, 20) des Befestigungsflansches (6) je ein Befestigungselement (10) des ersten Typs und der anderen Seitenkante ein Befestigungselement (12) des zweiten Typs zugeordnet ist.

3. Einrichtung nach Anspruch 2, dadurch **gekennzeich****net,** daß die Befestigungselemente (10, 12) eine der Länge der zugeordneten Seitenkante (16, 20) des Befestigungsflansches (6) im wesentlichen entsprechende Länge haben und daß die Aufstecktaschen (14, 18) jeweils zur Aufnahme der ganzen Seitenkante (16, 20) ausgelegt sind.

4. Einrichtung nach Anspruch 2 oder 3, dadurch **ge****kennzeichnet,** daß die auf der Oberseite bzw. Unterseite des Befestigungsflansches (6) aufliegenden Wände der Aufstecktaschen (14, 18) jeweils an die Form des mit dem Befestigungsflansch (6) verbundenen Gerätes (4) angepaßt sind.

5. Einrichtung nach einem der Ansprüche 1 bis 4, dadurch **gekennzeichnet**, daß die Befestigungselemente (10, 12) aus einem gummielastischen Material hergestellt sind.

6. Einrichtung nach einem der Ansprüche 1 bis 5, dadurch **gekennzeichnet**, daß der Schnappriegel (34) aus einem federelastischen Material hergestellt ist.

## Claims

1. Device for mounting a component, having a mounting flange, in a device wall, comprising mounting elements (10, 12) which are provided on the one hand with plug-on pockets (14, 18) for plugging onto the mounting flange (6) and on the other hand with anchoring elements (24, 28) for anchoring on edge regions (26, 30) of the device wall (2), characterized by mounting elements (10) of a first type, whose anchoring elements (24) are in each case constructed like tongs for gripping around the two sides of the edge region (26) of a device wall (2), and by mounting elements (12) of a second type, whose anchoring elements (28) comprise stop bosses (32), in each case constructed for bearing on one side of the edge region (30) of a device wall (2), and at least one snap lock (34), which can be inserted between the mounting element (12) and the associated edge region (30) of the device wall (2), having a spring tongue (44) for gripping behind the rear side, in the direction (42) of insertion, of the edge region (30) and having a holding flange (46) for bearing on the front side, in the direction of insertion, of the mounting element (12).

2. Device according to Claim 1, for a component having a rectangular mounting flange, characterized in that in each case one mounting element (10) of the first type is assigned to one of two side edges (16, 20), facing away from one another, of the mounting flange (6), and a mounting element (12) of the second type is assigned to the other side edge.

3. Device according to Claim 2, characterized in that the mounting elements (10, 12) have a length which essentially corresponds to the length of the assigned side edge (16, 20) of the mounting flange (6), and in that the plug-on pockets (14, 18) are in each case designed to hold the entire side edge (16, 20).

4. Device according to Claim 2 or 3, characterized in that the walls of the plug-on pockets (14, 18) resting on the upper side and, respectively, on the lower side of the mounting flange (6), are in each case matched to the shape of the apparatus (4) connected to the mounting flange (6).

5. Device according to one of Claims 1 to 4, characterized in that the mounting elements (10, 12) are produced from an elastomeric material.

6. Device according to one of Claims 1 to 5, characterized in that the snap lock (34) is produced from a resiliently elastic material.

## Revendications

1. Dispositif pour fixer une pièce pourvue d'une bride de fixation sur une paroi d'appareil, comportant
des éléments (10, 12) de fixation qui sont munis d'une part d'étuis (14, 18) creux à emboîter sur la bride (6) de fixation et, d'autre part, des éléments (24, 28) d'ancrage pour un ancrage sur les bords (26, 30) de la paroi (2) d'appareil, caractérisé par des éléments (10) de fixation d'un premier type, dont chacun des éléments (24) d'ancrage est réalisé en forme de tenailles pour saisir le bord (26) d'une paroi (2) d'appareil des deux côtés, ainsi que par des éléments (12) de fixation d'un second type, dont chacun des éléments (28) d'ancrage comporte des cames (32) de butée formées pour prendre appui sur un côté du bord (30) d'une paroi (2) d'appareil, et par au moins un verrou (34) encliquetable qu'on peut insérer entre l'élément (12) de fixation et le bord (30) correspondant de la paroi (2) d'appareil et qui comporte une languette (44) élastique pour saisir par derrière la face arrière, par rapport à la direction d'insertion (42), du bord (30) et une patte (46) d'arrêt destinée à prendre appui sur la face avant, par rapport à la direction d'insertion, de l'élément (12) de fixation.

2. Dispositif selon la revendication 1, destiné à une pièce ayant une bride de fixation rectangulaire, caractérisé par le fait que, considérant deux bords (16, 20) latéraux de la bride (6) de fixation opposés l'un à l'autre, un élément (10) de fixation du premier type est associé à l'un des deux bords latéraux et qu'un élément (12) de fixation du second type est associé à l'autre bord latéral.

3. Dispositif selon la revendication 2, caractérisé par le fait que les éléments (10, 12) de fixation ont une longueur correspondant sensiblement à la longueur du bord (16, 20) latéral associé de la bride (6) de fixation et que chaque étui (14, 18) creux est dimensionné pour loger chaque fois tout le bord (16, 20) latéral.

4. Dispositif selon la revendication 2 ou 3, caractérisé par le fait que chacune des parois des étuis (14, 18) creux qui portent sur la face supérieure ou, selon le cas, sur la face inférieure de la bride (6) de fixation est adaptée à la forme de l'appareil (4) relié à la bride (6) de fixation.

5. Dispositif selon une des revendications 1 à 4, caractérisé par le fait que les éléments (10, 12) de fixation sont fabriqués dans une matière ayant l'élasticité du caoutchouc.

6. Dispositif selon une des revendications 1 à 5, caractérisé par le fait que le verrou (34) encliquetable est fabriqué dans une matière ayant l'élasticité d'un ressort.
